# EUROPEAN PATENT APPLICATION

(11) **EP 4 848 545 A1**
(43) Date of publication of application: **02.12.2026**
(21) Application number: 26181555.9
(22) Date of filing: 28.05.2026
(51) Int. Cl.: H02K 15/023, H02K 15/035, H02K 17/26, H02K 21/46

(54) **INDUCTION MOTOR ROTOR AND METHOD OF MANUFACTURE THEREOF**

(30) Priority: 29.05.2025 US 202519222288
(71) Applicant: ABB Schweiz AG, 5400 Baden (CH)
(72) Inventor: ROBISON, Jaron Lee, Fort Smith, 72901 (US); WEINDEL, Heath Joseph, Fort Smith, 72901 (US); HOFFMAN, Matthew Dodge, Westville, 74965 (US)
(74) Representative: Zimmermann & Partner Patentanwälte mbB

(57) **Abstract**

A rotor (200) for an induction motor (100) is described. The rotor (200) includes a core. The core includes at least one channel axially extending along a length of the core. The rotor (200) further includes a magnetic polymer disposed within the at least one channel.

## Description

### TECHNICAL FIELD

The field of the disclosure relates generally to rotors for induction motors, and more particularly, to rotors for induction motors having a magnetic polymer in the rotor.

### BACKGROUND

Synchronous machines typically include one or more permanent magnets. The inclusion of these permanent magnets in the asynchronous machines typically requires the application of difficult to implement processes for accurately placing the magnets in the machines. Additionally, such magnets in asynchronous machines are made from expensive, specialized magnetic materials. In some cases, these permanent magnets are accurately placed in the machine before an asynchronous conductive cage is cast. However, placing permanent magnets in the machine before casting the cage requires the permanent magnets to be made from magnetic materials that are capable of withstanding the elevated temperatures associated with the casting of the cage. Further, if the permanent magnets are placed in the asynchronous machine after the cage is cast, the magnets may need to possess specific geometries and/or a difficult and inefficient to apply placement process that enables the permanent magnets to be placed in a desired location. Additionally, traditional magnetization process for the magnets placed in the rotor core requires careful consideration of motor geometries and specialty magnetization equipment due to the damping effect of the asynchronous conductive cage.

Based on the foregoing, a need exists for a rotor of an asynchronous machine that includes a magnetic polymer can be efficiently located within a rotor during manufacturing without the need for difficult and inefficient processes and/or expensive specialized magnetic materials.

This background section is intended to introduce the reader to various aspects of art that may be related to various aspects of the present disclosure, which are described and/or claimed below. This discussion is believed to be helpful in providing the reader with supporting information to facilitate a better understanding of the various aspects of the present disclosure. Accordingly, it should be understood that these statements are to be read in this light, and not as admissions of prior art.

### BRIEF DESCRIPTION

In one aspect, a rotor for a synchronous induction motor is described. The rotor comprises a core. The core includes at least one channel axially extending along a length of the core. The rotor further comprises a magnetic polymer disposed within the at least one channel.

In another aspect, a motor is described. The motor comprises an outer body defining a chamber and a rotor disposed within the chamber. The rotor comprises a core. The core comprises at least one channel axially extending along a length of the core. The rotor further comprises a magnetic polymer disposed within the at least one channel.

In yet another aspect, a method of manufacture for a rotor for an induction motor is described. The method comprises forming a core for a rotor. The core comprises at least one channel extending axially within the core along a length of the core. The method further comprises injection molding a magnetic polymer into the at least one channel of the core.

Various refinements exist of the features noted in relation to the above-mentioned aspects. Further features may also be incorporated in the above-mentioned aspects as well. These refinements and additional features may exist individually or in any combination. For instance, various features discussed below in relation to any of the illustrated examples may be incorporated into any of the above-described aspects, alone or in any combination.

### BRIEF DESCRIPTION OF DRAWINGS

The following drawings form part of the present specification and are included to further demonstrate certain aspects of the present disclosure. The disclosure may be better understood by reference to one or more of these drawings in combination with the detailed description of specific embodiments presented herein.
Fig. 1 depicts a partial-sectional perspective view of a motor;
Fig. 2 depicts a perspective view of the motor of Fig. 1 with an end bell of the motor removed;
Fig. 3 depicts a perspective view of a rotor of the motor of Fig. 1;
Fig. 4A depicts a perspective view of a cage of the rotor of Fig. 3;
Fig. 4B depicts a cross-sectional view of the cage of Fig. 4A;
Fig. 5 depicts a cross-sectional view of a core of the rotor of Fig. 3 after casting of a cage of the rotor, with a shaft of a rotor removed;
Fig. 6 depicts a cross-sectional view of a core of the rotor of Fig. 3 after the casting of the cage of the rotor and a magnetic polymer, with a shaft of the rotor removed;
Fig. 7 depicts a front view of a lam for the rotor of Fig. 3; and
Fig. 8 depicts a flowchart of an exemplary method of manufacture for an induction motor rotor.

Corresponding reference characters indicate corresponding parts throughout the several views of the drawings. Although specific features of various examples may be shown in some drawings and not in others, this is for convenience only. Any feature of any drawing may be referenced or claimed in combination with any feature of any other drawing.

### DETAILED DESCRIPTION

The following detailed description and examples set forth preferred materials, components, and procedures used in accordance with the present disclosure. This description and these examples, however, are provided by way of illustration only, and nothing therein shall be deemed to be a limitation upon the overall scope of the present disclosure.

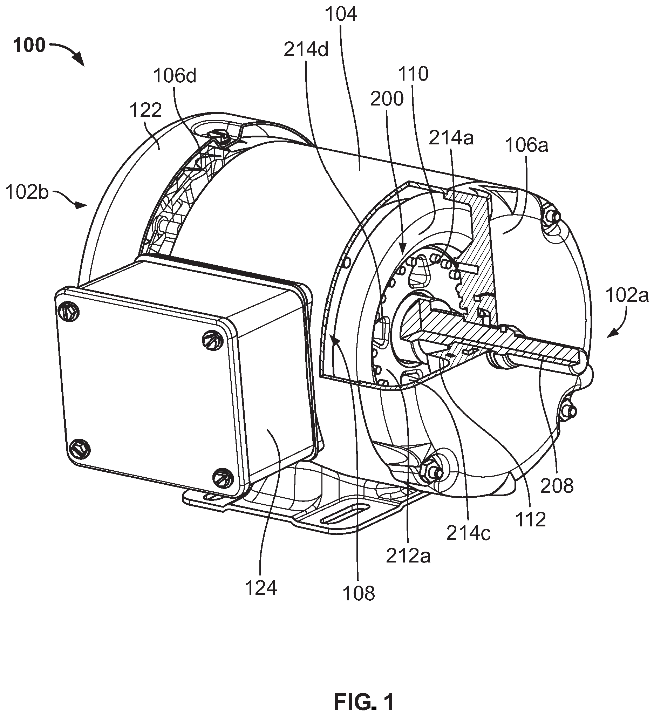

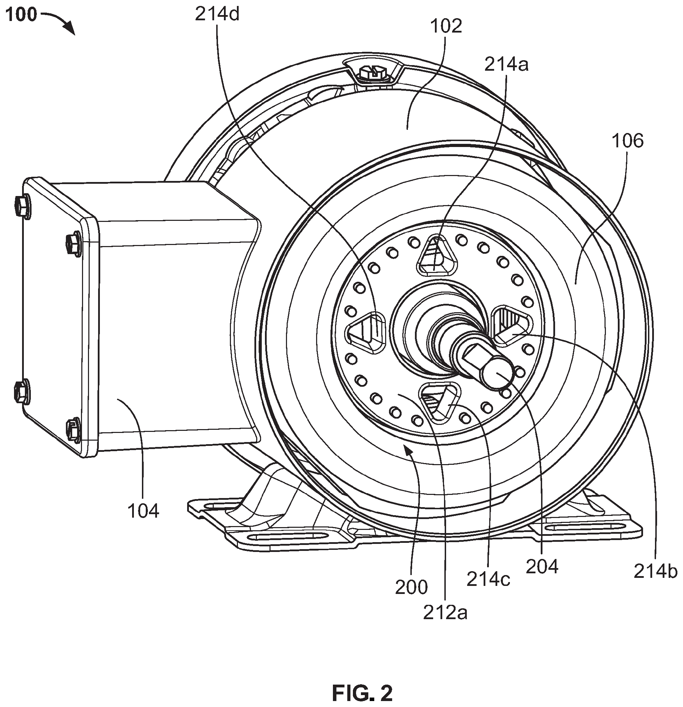

Fig. 1 illustrates a partial-sectional perspective view of a motor 100. Fig. 2 illustrates a perspective view of the motor 100 of Fig. 1 with an end bell 106a of the motor 100 removed. In some embodiments, the motor 100 may be an induction motor.

The motor 100 may have a drive end 102a and a non-drive end 102b. The drive end 102a of the motor 100 is an end of the motor 100 where a shaft 204 of a rotor 200 is connected to a component that is driven by motor 100 (e.g., wheels (not shown), drive train (not shown), pumps, conveyor systems, or the like). The motor 100 includes a housing 104. The housing 104 may include a first end bell 106a disposed at a drive end 102a of the motor 100 and a second end bell 106b disposed proximate to the non-drive end 102b of the motor 100.

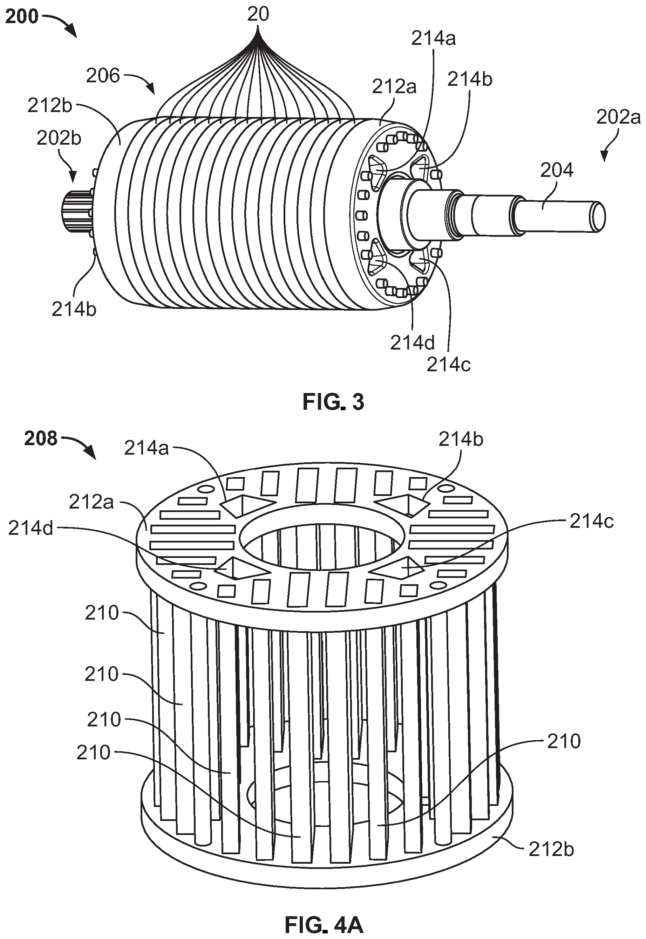

The housing 104 defines a chamber 108 that may house internal components of the motor 100. Some examples of internal motor components that may be located in the chamber may comprise, but are not limited to a stator 110, a rotor 200 (described in more detail in reference to Figs. 3-7), a fan (not shown), at least one seal (not shown), or at least one bearing 112.

The stator 110 may be configured to generate a rotating magnetic field when the motor 100 is operating. The rotating magnetic field may be used to produce rotary motion in the rotor 200. For example, when an alternating current is applied to a stator 110 after the motor 100 is started, the stator 110 may be configured to generate a rotating magnetic field. The rotating magnetic field may induce currents in the rotor 200 to create a rotor 200 magnetic field.. The interaction between the rotating magnetic field of the stator 110 and the magnetic field of the rotor 200 produces a torque that causes the rotor 200 to rotate. The rotor 200 may rotate at the same speed as the rotating magnetic field of the stator 110 to cause the motor 100 to operate in a manner that is similar to the operation of an asynchronous motor after starting of the motor 100.

The fan may be disposed proximate the non-drive end 102b of the motor 100 and be configured to cool the motor 100 and other components of the motor 100 during operation of the motor 100 and thereby prevent overheating of the components and/or the motor 100 during motor use. Alternatively, the fan may be disposed proximate the drive end 102a of the motor 100. Each seal may be configured to act as a barrier that prevents the entry of debris into housing 104 and chamber 108 that may interfere with the operation of the motor 100 and/or rotation of the rotor 200. Each bearing 112 may be configured to promote smooth rotation of a shaft 208 of the rotor 200 and reduce friction and heat generation that produced by the rotating shaft 208. The motor 100 may include a first bearing 112 disposed proximate to the drive end 102a of the motor 100 and a second bearing 112 disposed proximate to the non-drive end 102b of the motor 100.

The motor 100 may additionally include a fan cover 122 that covers the fan at a non-drive end 102b of the motor 100. The fan cover 122 may be attached to the housing 104 using fasteners, such as bolts, or the like. The fan cover 122 may protect the fan from debris that may cause damage and interfere with efficient operation of the fan and/or motor 100.

The motor 100 may include a wiring box 124. The wiring box 124 may be mounted to the housing 104. The wiring box 124 may define a space for connecting internal motor wiring (not shown) to a power supply and/or control devices for operation of the motor 100. The wiring box 124 may protect these connections from debris and/or moisture that may damage the connections and interfere with operation of the motor 100.

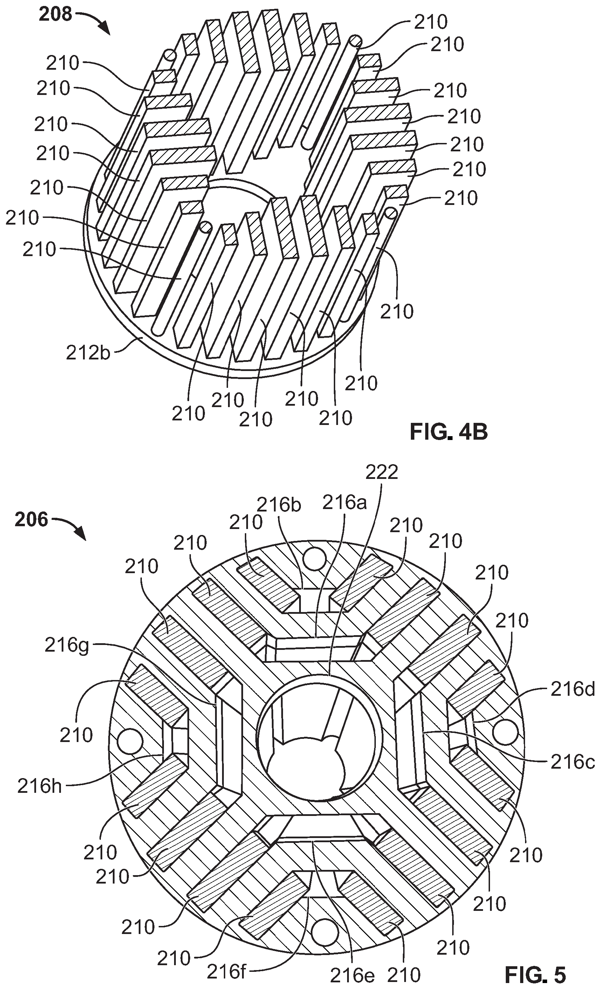

Fig. 3 illustrates a perspective view of the rotor 200 of the motor 100 of Fig. 1. Fig. 4A illustrates a perspective view of a cage 208 of the rotor 200 of Fig. 3. Fig. 4B illustrates a cross-sectional view of the cage 208 of Fig. 4A.

The rotor 200 may include a drive end 202a that is located at the drive end 102a of the motor 100 and a non-drive end 202b that is located at the non-drive end 102b of the motor 100. As described above, the drive end 202a of the rotor 200 is where the shaft 204 of the rotor 200 is connected to a component that is driven by motor 100. The shaft 204 may extend between the drive end 202a and the non-drive end 202b of the rotor 200. The shaft 204 may also extend axially through the end bell 106a of motor 100 and be configured to convert electrical energy into mechanical energy during rotation of the rotor 200 caused by the interaction of the magnetic field of the rotor 200 and the rotating magnetic field generated by the stator 110.

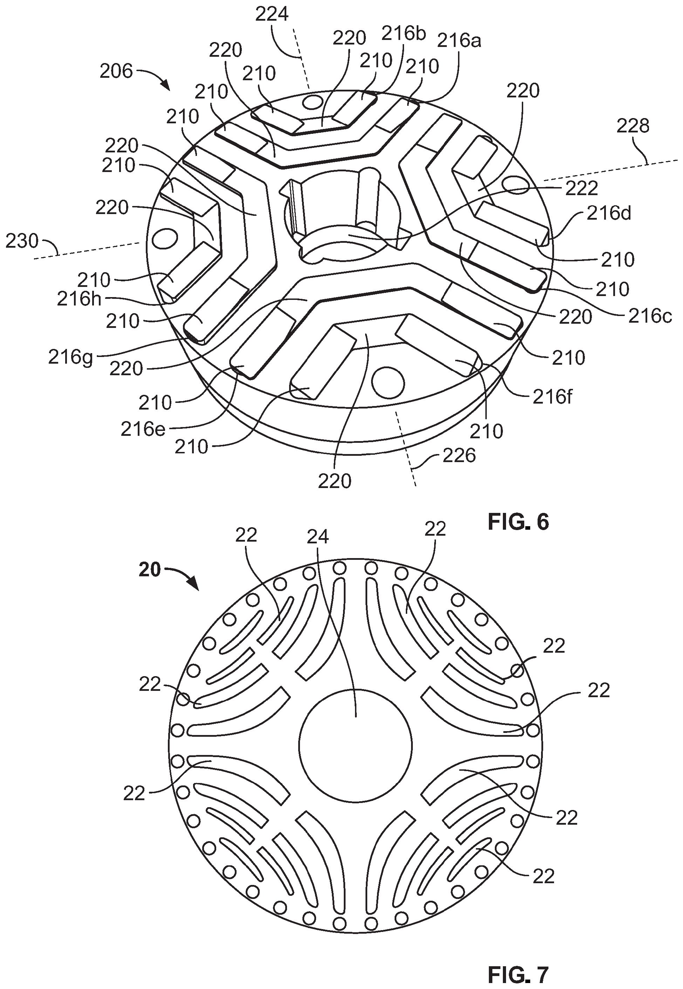

The rotor 200 includes a core 206. The core 206 may be positioned along the shaft 204 between the drive end 202a and the non-drive end 202b of the shaft 204. The core may be positioned along the shaft equidistant from the drive and non-drive ends 202a, 202b or may be located closer to one of the drive or non-drive ends as shown in Fig. 3. As shown in Fig. 3, the core 206 may be located along the shaft 204 so that the center 207 of the core 206 is located off-center on the shaft 204, and separated by a distance from the non-drive end 202b that is of a smaller magnitude than the magnitude of the distance between the core center and the drive end 202a of the shaft 204 of the rotor 200. The core 206 may include a plurality of lams 20, stacked together to form core 206. The lams are described in more detail below with reference to Fig. 7. The plurality of lams 20 that comprises the rotor may include any number of lams 20. As shown specifically in Fig. 3, the plurality of lams 20 includes 16 lams to form the core 206. The core may comprise any suitable number of lams to produce the desired operating characteristics for motor 100, such as 1, 100, 500, or the like. The core 206 may be disposed on the shaft 204 such that the core 206 axially extends along the shaft between the drive end 202a and the non-drive end 202b of the rotor 200.

The rotor 200 may include a cage 208, as best shown in Figs. 4A and 4B. The cage 208 may be formed using a die casting process. The cage 208 may include a plurality of axially extending bars 210 extending within the core 206 along a length of the core 206. The plurality of bars 210 may extend between, and connect a first end ring 212a of the cage 208 and a second end ring 212b of the cage 208. Each of the plurality of bars 210 may be made of a conductive material, such as aluminum, copper, brass, or the like. Each of the plurality of bars 210 may be located within a corresponding channel 216 extending within the core 206. For example, as best shown in Fig. 6, each of the plurality of bars 210 may be located at outermost lateral portions of each channel 216.

The core 206 of Fig. 6 includes four pairs of channels generally referred to at 216, and specifically 216a-216h. The channels 216 have similar configurations with a radially inwardly channel having a greater length than the length of the paired channel that is located radially outwardly from the channel and is nested within the radially inwardly located channel. More specifically, a first pair of channels 216 comprises radially inward aperture 216a, and radially outward channel 216b nested within channel 216a. A second pair of channels 216 comprises radially inward channel 216c, and radially outward channel 216d nested within channel 216c. A third pair of channels 216 comprises radially inward channel 216e, and radially outward channel 216f nested within channel 216e. A fourth pair of channels 216 comprises radially inward channel 216g, and radially outward channel 216h nested within channel 216g.

As shown in Figs. 5 and 6, each pair of channels is separated from adjacent channel pairs by ninety degrees. However, the core 206 may include any number of channels separated from adjacent channel pairs by any number of degrees. For example, the core 206 may include six pairs of channels that are each separated from adjacent channel pairs by sixty degrees. When the lams are stacked together to form the core 206, the respective apertures (e.g., apertures 22) of lams 20 are axially aligned and thereby define associated channels 216. For example, the lam 20 may define apertures that are each shaped similar to a cross sectional shape of channels 216a-h. Each aperture of the lam 20 is axially aligned with corresponding apertures on each of the plurality of lams 20 to form channels 216a-h. It should be understood that the lam 20 may comprise any configuration of apertures, and the configuration of lam 20 is provided for purposes of describing the present embodiment of the disclosure. An alternate embodiment lam 20 and channel apertures 22 is provided in Fig. 7.

Fig. 7 illustrates a front view of an exemplary embodiment of a lam 20 for a rotor (e.g., rotor 200 or the like). The lam 20 may be made of may be made of a magnetic permeable material to direct and control flow of magnetic fields, such as silicon steel, cobalt alloys, nickel alloys, or the like. The lam 20 is also coated with an insulating material, such as varnishes, resins, specialized coatings such as C-5 type coatings, or the like. The insulating material may allow the rotor 200 to operate efficiently, described in more detail below. The lam 20 includes at least one channel aperture 22 and a shaft aperture 24. Each of the at least one channel aperture 22 may be sized and shaped to locate the magnetic polymer 220 in a specific location within the core 206 to produce desired operational properties associated with the motor 100. The shaft aperture 24 may be sized and shaped to substantially correspond to a size and a shape of a shaft (e.g., shaft 204 or the like).

A plurality of lams 20 may be stacked together to form a core (e.g., core 206 or the like) for a rotor (e.g., rotor 200 or the like). An insulating material may be located between each of the plurality of lams 20 and may be configured to minimize power dissipation, such as heat or energy losses, and/or improve efficiency during operation of the motor 100. When each of the plurality of lams 20 are stacked to form the core 206, the outer periphery of each of the plurality of lams 20 may be aligned to define a cylindrical shape for the core 206. Each of the channel apertures 22 may also be aligned with corresponding channel apertures 22 on each of the plurality of lams 20 to form the at least one channel 216 for the core 206. The shaft aperture 24 for each of the plurality of lams 20 may also be aligned to define the shaft channel 222 for the core 206.

Referring back to Fig. 3, the first end ring 212a may be disposed proximate an axial end of the core 206 that is proximate the drive end 202a of the rotor 200 and a second end ring 212b disposed proximate an axial end of the core 206 that is proximate the non-drive end 202b of the rotor 200. The first and second end rings 212a, 212b may be made of a conductive material, such as aluminum, copper, brass, or the like. In some embodiments, each of the first end ring 212a and the second end ring 212b may be made of the same material as the plurality of bars 210 to ensure the first end ring 212a and the second end ring 212b have the electrical conductivity required to provide a low-resistance path for a current to flow through the cage 208 and/or rotor 206, the first end ring 212a, the second end ring 212b, and/or the rotor 200. As described above, the current flowing through the rotor 200 creates a magnetic field for the rotor 200 that interacts with the rotating magnetic field created by a stator (e.g., stator 110 or the like) to produce torque and cause rotation of the rotor 200 during operation of a motor (e.g., motor 100 or the like).

At least one of the first and second end rings 212a, 212b may define at least one gate 214a-214d. For example, as shown in Figs. 3 and 4A, the first end ring 212a defines four gates 214a-214d. The second end ring 212b may also define four gates that are disposed in a substantially similar manner as the gates 214a-214d provided on the first end ring 212a. However, each of the first and second end rings 212a, 212b may include any number of gates. Each of the gates 214a-214d may be aligned with corresponding channels 216a-216h to be in fluid communication with those channels 216a - 216h to direct a magnetic polymer 220 into the at least one channel 216 of the core 206, as described in more detail below with reference to Fig. 5. For example, gate 214a may be aligned with channels 216a, 216b to direct the magnetic polymer 220 into those corresponding channels 216a, 216b. Gate 214b may be aligned with channels 216c, 216d to direct the magnetic polymer 220 into those corresponding channels 216c, 216d. Gate 214c may be aligned with channels 216e, 216f to direct the magnetic polymer 220 into those corresponding channels 216e, 216f. Gate 214d may be aligned with channels 216g, 216h to direct the magnetic polymer 220 into those corresponding channels 216g, 216h.

Fig. 5 illustrates a cross-sectional view of the core 206 of the rotor 200 of Fig. 3 after the casting of the cage 208 of the rotor 200 with the shaft 204 of the rotor 200 removed. Fig. 6 illustrates a cross-sectional view of the core 206 of the rotor 200 of Fig. 3 after the casting of the cage 208 of the rotor 200 and the magnetic polymer 220, with the shaft 204 of the rotor 200 removed.

As shown in Figs. 5 and 6, the core 206 includes at least one channel 216. Each of the at least one channel 216 may axially extend along the length of the core 206. In some embodiments, the at least one channel 216 may each be flux barriers that each create paths of higher magnetic reluctance to guide magnetic flux through the core 206 and/or rotor 220 and influence the interaction of the magnetic field of the rotor 200 and the magnetic field of the stator 100. The at least one channel 216 may be configured to receive a material for forming the cage 208. The material may be cast into the at least one channel to form the bars 210 of the cage 208. As best shown in Fig. 6, each of the plurality of bars 210 may be disposed circumferentially around, and proximate to an outer periphery of the core 206 such that each of the bars 210 may be located at each outermost lateral portion of each channel 216.

The at least one channel 216 may also be configured to receive a magnetic polymer 220 after the casting of the cage 208. The magnetic polymer 220 may selected from the group consisting of strontium ferrite, neodymium-based materials, samarium cobalt-based materials, and neodymium and ferrite-based materials. The magnetic polymer 220 may be configured to aid in torque production and correct a power factor associated with the operation of the motor 100. The magnetic polymer 220 may be injected into, around, and/or behind the bars 210 of the cage 208 within each channel 216, as best shown in Fig. 6. The magnetic polymer 220 may be located within each channel 216a-h such that the magnetic polymer 220 is laterally bound within each channel 216 by two bars 210 that are disposed at each end of each channel 216 to ensure the magnetic polymer 220 is surrounded by materials with lower magnetic permeability such that the materials are less responsive to external magnetic fields (e.g., stator magnetic field or the like) than the magnetic polymer 220. Alternatively, the magnetic polymer 220 may be laterally bound within each channel 216 by lamination steel of the lams 20 forming the core 206.

The magnetic polymer 220 may be injected into the at least one channel 216 through the gates 214a-214d along the end rings 212a, 212b. A nozzle (not shown) of an injection unit (not shown) may be located proximate and/or inserted into the at least one gate 214a-214d to allow the magnetic polymer 220 to be injected into the at least one channel 216. The magnetic polymer 220 may be fed into and heated within the injection unit. Once heated, the magnetic polymer 220 may be pushed through the nozzle and into the at least one channel 216.

The injection of the magnetic polymer 220 may also allow for the magnetic polymer to be formed into any number of unique geometries that may be used to produce specific required performance attributes for the motor 100. The magnetic polymer 220 may occupy the open volume within each at least one channel 216 unoccupied by the bars 210 of the cage 208. By filling in the volume within each at least one channel 216, the magnetic polymer 220 may be fixed directly to a surface of the plurality of lams 20 that make up the core 206 of the rotor 200 and provide a uniform load distribution along the plurality of lams 20. The magnetic polymer 220 may also provide a rigid structure within the core 206 and/or rotor 200, which can be used to increase variability in the length of the core 206 compared to existing cores.

During the injection of the magnetic polymer, a fill volume, an injection rate, and a pressure of the injection of the magnetic polymer 220 may need to be controlled to ensure proper placement and filling of the magnetic polymer 220. For example, the pressure associated with the injection of the magnetic polymer 220 may be any pressure between about 700 pounds per square inch (psi) and about 900 psi, but is not limited thereto. The injection rate may be about 15 millimeters per second (mm/s) to about 35 mm/s. Additionally, or alternatively, injection molding the magnetic polymer 220 through at least one end ring 212a, 212b may comprise controlling a temperature of the magnetic polymer 220 and/or the core 206. For example, the temperature of the magnetic polymer may need to be maintained between about 450 degrees Fahrenheit (°F) and about 565 °F. The temperature of the rotor 200 may be maintained between about 190 °F and about 233 °F.

Once the magnetic polymer 220 is injected into the core 206, the magnetic polymer 220 may need to be magnetized around a plurality of magnetic poles. For example, the plurality of magnetic poles may include four magnetic poles. The four magnetic poles may include a first (e.g., north) pole extending along axis 224, a second (e.g., south) pole, opposing the first pole, extending along axis 226, a third (e.g., north) pole extending along axis 228, a fourth (e.g., south) pole, opposing the third pole, extending along axis 230. However, the plurality of magnetic poles may include any number of magnetic poles.

The core 206 may also define a shaft channel 222. The shaft channel 222 may extend axially along the length of the core 206. The shaft channel 222 may be configured to receive the shaft 204 to allow the core 206 to be disposed on the shaft 204 to rotate with the shaft when the shaft is rotated during operation of the motor 100. Once the interaction of the magnetic fields created by each of the rotor 200 and the stator 110 is initiated, and the rotor 200 begins to rotate, the shaft 204 is driven to transmit power created during the operation of the motor 100 to other components (e.g., wheels (not shown), drive train (not shown), pumps, conveyor systems, or the like) driven by the motor 100.

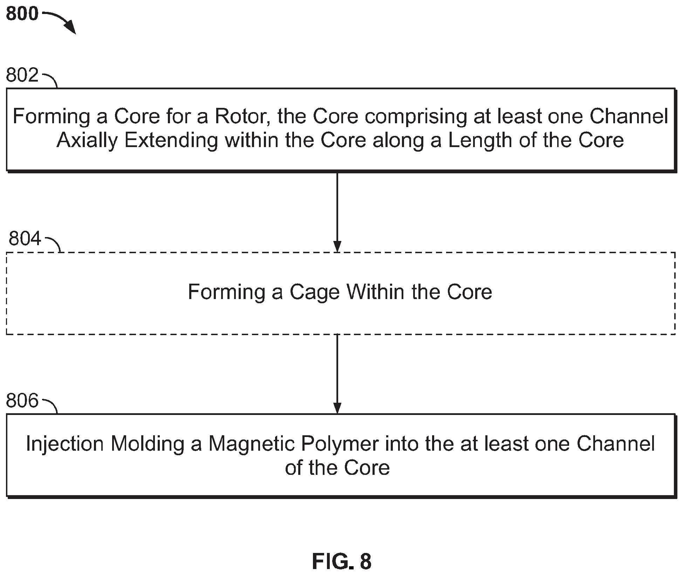

Fig. 8 illustrates a flowchart of an exemplary method 800 of manufacture for a rotor 200 for an induction motor 100. At 802, the method 800 comprises forming a core 206 for a rotor 200. The core 206 further comprises at least one channel 216 axially extending within the core 206 along a length of the core 206. Forming the core 206 may comprise aligning a plurality of channel apertures 22 extending through each of a plurality of lams to define the at least one channel 216. At 804, the method 800 may also comprise forming a cage 208 within the core 206. The cage 208 may include a plurality of axially extending bars 210 extending within the core 206 along a length of the core 206. The plurality of bars 210 may extend between, and connect a first end ring 212a of the cage 208 and a second end ring 212b of the cage 208.

At 806, the method 800 comprises injection molding a magnetic polymer into the at least one channel 216 of the core 206. Injection molding the magnetic polymer into the at least one channel 216 may comprise injecting the magnetic polymer into the at least one channel 216 between two bars of the plurality of bars 210 disposed within each channel 216.

Injection molding the magnetic polymer 220 into the at least one channel 216 may comprise injecting the magnetic polymer 220 through at least one end ring 212a, 212b. Injection molding the magnetic polymer 220 through at least one end ring 212a, 212b may comprise aligning each of at least one gate 214a-214d of the at least one end ring 212a, 212b with the at least one channel 216. Injection molding the magnetic polymer 220 through at least one end ring 212a, 212b may comprise controlling a fill volume and a pressure of the injection molding of the magnetic polymer 220. Additionally, or alternatively, injection molding the magnetic polymer 220 through at least one end ring 212a, 212b may comprise controlling a temperature of the magnetic polymer 220.

In some embodiments, the method 800 may comprise casting a cage 208 within the core 206 of the rotor 200, the cage 208 comprising a plurality of bars 210 axially extending within the core 206 along the length of the core 206. Injection molding the magnetic polymer 200 into the core 206 may comprise injecting the magnetic polymer 220 into at least one channel 216 between two bars of the plurality of bars 210 disposed within each channel 216.

In some embodiments, the method 800 may comprise magnetizing the rotor 200. Magnetizing the rotor 200 may comprise magnetizing the rotor 200 during the injection molding of the magnetic polymer 220. Additionally, or alternatively, magnetizing the rotor 200 may comprise magnetizing the rotor 200 once the injection molding of the magnetic polymer 220 is completed.

As used herein, an element or step recited in the singular and proceeded with the word "a" or "an" should be understood as not excluding plural elements or steps unless such exclusion is explicitly recited. Furthermore, references to "one embodiment" of the disclosure or an "exemplary" or "example" embodiment are not intended to be interpreted as excluding the existence of additional embodiments that also incorporate the recited features. Likewise, limitations associated with "one embodiment" or "an embodiment" should not be interpreted as limiting to all embodiments unless explicitly recited.

Disjunctive language such as the phrase "at least one of X, Y, or Z," unless specifically stated otherwise, is generally intended, within the context presented, to disclose that an item, term, etc. may be either X, Y, or Z, or any combination thereof (e.g., X, Y, and/or Z). Likewise, conjunctive language such as the phrase "at least one of X, Y, and Z," unless specifically stated otherwise, is generally intended, within the context presented, to disclose at least one of X, at least one of Y, and at least one of Z.

The disclosed systems and methods are not limited to the specific embodiments described herein. Rather, components of the systems or steps of the methods may be utilized independently and separately from other described components or steps.

This written description uses examples to disclose various embodiments, which include the best mode, to enable any person skilled in the art to practice those embodiments, including making and using any devices or systems and performing any incorporated methods. The patentable scope is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.
Next, implementations according to embodiments of the disclosure are discussed:
1. A rotor for a synchronous induction motor, the rotor comprising:
   a core, the core comprising at least one channel axially extending along a length of the core; and
   a magnetic polymer disposed within the at least one channel.
2. The rotor of implementation 1, wherein the rotor further comprises a cage comprising a plurality of conductive bars extending along the length of the core within the core.
3. The rotor of implementation 2, wherein the cage further comprises a first end ring located proximate a first end of the core and a second end ring located proximate a second end of the core.
4. The rotor of implementation 3, wherein the first end ring comprises at least one gate.
5. The rotor of implementation 4, wherein the at least one gate is in fluid communication with the at least one channel.
6. The rotor of implementation 2, wherein the magnetic polymer is laterally enclosed by the cage within each of the at least one channel.
7. The rotor of implementation 1, wherein the magnetic polymer is selected from the group consisting of strontium ferrite, neodymium-based materials, samarium cobalt-based materials, and neodymium and ferrite-based materials.
8. A motor comprising:
   an outer body defining a chamber; and
   a rotor disposed within the chamber, the rotor comprising:
      a core, the core comprising at least one channel axially extending along a length of the core; and
      a magnetic polymer disposed within the at least one channel.
9. The motor of implementation 8, wherein the rotor further comprises a cage comprising a plurality of bars extending along the length of the core within the core.
10. The motor of implementation 9, wherein the cage further comprises a first end ring located proximate a first end of the core and a second end ring located proximate a second end of the core.
11. The motor of implementation 10, wherein the first end ring comprises at least one gate.
12. The motor of implementation 9, wherein the magnetic polymer is laterally enclosed by the cage within each of the at least one channel.
13. The motor of implementation 8, wherein the magnetic polymer is selected from the group consisting of strontium ferrite, neodymium-based materials, samarium cobalt-based materials, and neodymium and ferrite-based materials.
14. A method of manufacture for a rotor for an induction motor, the method comprising:
   forming a core for a rotor, the core comprising at least one channel axially extending within the core along a length of the core; and
   injection molding a magnetic polymer into the at least one channel of the core.
15. The method of implementation 14, further comprising forming a cage within the core of the rotor, the cage comprising a plurality of bars axially extending within the core along the length of the core.
16. The method of implementation 15, wherein injection molding the magnetic polymer into the core comprises injecting the magnetic polymer into the at least one channel between two bars of the plurality of bars disposed within each channel.
17. The method of implementation 14, wherein injection molding the magnetic polymer into the core comprises injecting the magnetic polymer through at least one end ring of the cage, each of the at least one end ring disposed on one opposing end of the core.
18. The method of implementation 17, wherein injecting the magnetic polymer through at least one end ring comprises aligning at least one gate on the at least one end ring with the at least one channel.
19. The method of implementation 17, wherein injecting the magnetic polymer through at least one end ring comprises controlling a fill volume and a pressure of the injection molding of the magnetic polymer.
20. The method of implementation 14, wherein the magnetic polymer is selected from the group consisting of strontium ferrite, neodymium-based materials, samarium cobalt-based materials, and neodymium and ferrite-based materials.

## Claims

1. A rotor for a synchronous induction motor, the rotor comprising:
a core, the core comprising at least one channel axially extending along a length of the core; and
a magnetic polymer disposed within the at least one channel.

2. The rotor of claim 1, wherein the rotor further comprises a cage comprising a plurality of bars, particularly conductive bars, extending along the length of the core within the core.

3. The rotor of claim 1 or 2, wherein the cage further comprises a first end ring located proximate a first end of the core and a second end ring located proximate a second end of the core.

4. The rotor of claim 3, wherein the first end ring comprises at least one gate.

5. The rotor of claim 4, wherein the at least one gate is in fluid communication with the at least one channel.

6. The rotor of any one of the preceding claims, wherein the magnetic polymer is laterally enclosed by the cage within each of the at least one channel.

7. The rotor of any one of the preceding claims, wherein the magnetic polymer is selected from the group consisting of strontium ferrite, neodymium-based materials, samarium cobalt-based materials, and neodymium and ferrite-based materials.

8. A motor comprising:
an outer body defining a chamber; and
the rotor according to any one of claims 1 to 7 disposed within the chamber.

9. A method of manufacture for a rotor for an induction motor, the method comprising:
forming a core for a rotor, the core comprising at least one channel axially extending within the core along a length of the core; and
injection molding a magnetic polymer into the at least one channel of the core.

10. The method of claim 9, further comprising forming a cage within the core of the rotor, the cage comprising a plurality of bars axially extending within the core along the length of the core.

11. The method of claim 9 or 10, wherein injection molding the magnetic polymer into the core comprises injecting the magnetic polymer into the at least one channel between two bars of the plurality of bars disposed within each channel.

12. The method of any one of claims 9 to 11, wherein injection molding the magnetic polymer into the core comprises injecting the magnetic polymer through at least one end ring of the cage, each of the at least one end ring disposed on one opposing end of the core.

13. The method of claim 12, wherein injecting the magnetic polymer through at least one end ring comprises aligning at least one gate on the at least one end ring with the at least one channel.

14. The method of claim 12 or 13, wherein injecting the magnetic polymer through at least one end ring comprises controlling a fill volume and a pressure of the injection molding of the magnetic polymer.

15. The method of any one of claims 9 to 14, wherein the magnetic polymer is selected from the group consisting of strontium ferrite, neodymium-based materials, samarium cobalt-based materials, and neodymium and ferrite-based materials.
